# EUROPÄISCHE PATENTSCHRIFT

(11) **EP 1 357 680 B1**
(45) Veröffentlichungstag und Bekanntmachung des Hinweises auf die Patenterteilung: **26.11.2008**
(21) Anmeldenummer: 02009219.3
(22) Anmeldetag: 25.04.2002
(51) Int. Cl.: H04B 3/54

(54) **Netzleitungsübertragungssystem**
Power line communication system
Système de communication sur des lignes électriques

(43) Veröffentlichungstag der Anmeldung: 29.10.2003
(73) Patentinhaber: Feller AG, 8810 Horgen (CH)
(72) Erfinder: Wagner, Matthias, 8824 Schönenberg (CH); Anderegg, Mario, 8006 Zürich (CH)
(74) Vertreter: Blum, Rudolf Emil

(56) Entgegenhaltungen:
- EP-A- 0 479 104
- US-A- 5 055 746
- US-A- 6 097 761

## Beschreibung

Die Erfindung betrifft eine Vorrichtung zur Signalübertragung bei einer elektrischen Hausinstallation gemäss Oberbegriff des Anspruchs 1. Ferner betrifft die Erfindung die Verwendung einer solchen Vorrichtung.

Es ist bekannt, bei elektrischen Hausinstallationen Signale zwischen verschiedenen Apparaten auszutauschen, insbesondere zwischen Bedienungsapparaten (Tastern)und zu betätigenden Apparaten bzw. Nebenstellen, so z.B. zum Schalten von Licht und Bedienen von Storen. In der Schrift DE-C-40 08 023 wird eine Signalübertragung für hochfrequente Signale auf der Netzphase als Trägerfrequenz aufgezeigt. Die dort vorgeschlagenen Signal-Koppelkondensatoren können hochfrequente Signale auf die anderen Netzphasen weiterleiten. Hochfrequente Signale benötigen aber sende- und empfängerseitig einen erheblichen Aufwand und sind aus der Sicht von Netzstörungen problematisch. Die Schriften US-A-5 055 746 und US-A-4 990 908 zeigen die Übermittlung von Signalen mittels des Wechselstromes auf einer Phasenleitung, dies aber nur zwischen Geräten, die an der selben Phase der Hausinstallation angeschlossen sind. US-A-6 097 761 zeigt die Übertragung von Energie und Signalen mittels eines Wechselspannungssignals. Die europäische Patentanmeldung 1 289 217 zeigt insbesondere ein Verfahren zur Signalübertragung bei einer Hausinstallation, bei welchem Signale mit Netzspannungshalbwellen auf einer von den Phasenleitungen getrennten Installationsleitung übertragen werden. Der Rückstrom fliesst auf dem vorhandenen Neutralleiter. Dieses Verfahren ist indes in der in der Anmeldung EP-A-1289 217 gezeigten Art auf solche Apparate und Nebenstellen beschränkt, die am selben Phasenkreis liegen. Auch Apparate und Nebenstellen, die über Sicherungen oder Fehlerstromschutzschalter getrennt sind können nicht mit Sicherheit kommunizieren.

Hier will die Erfindung Abhilfe schaffen und eine sichere Signalverbindung im ganzen Haus bzw. Gebäude mit Netzspannungssignalen ermöglichen.

Diese Aufgabe wird mit einer Vorrichtung gemäss Anspruch 1 gelöst.

Dadurch, dass die Vorrichtung über mindestens je einen Signaleingang und Signalausgang mit Signalempfangs- bzw. Signalerzeugungsmittel verfügt, und dass durch das Signalerzeugungsmittel am Ausgang die empfangenen Signale reproduzierbar sind, ist es möglich, die Steuersignale zwischen Apparaten und Nebenstellen über eine derartige Vorrichtung auch zwischen phasenkreisgetrennten oder auch sicherungstechnisch getrennten Apparaten und Nebenstellen sicher zu übertragen.

Vorzugsweise ist die Vorrichtung so ausgestaltet, dass die erzeugten Signale wahlweise um eine, zwei oder drei Phasenlagen der Hausinstallationsphasen gegenüber der Phasenlage der Eingangssignale verschoben sind, was die phasenrichtige Abgabe der Signale an einen anderen Phasenkreis als den Eingangskreis oder an den selben Phasenkreis erlaubt.

Vorzugsweise sind der Signaleingang und der Signalausgang galvanisch getrennt, was die Signalübertragung mit Netzspannung auch bei strikten Installationsvorschriften erlaubt, ohne dass dadurch eine Gefährdung von Benutzern oder ein Verstoss gegen Installationsregeln erfolgt.

Vorzugsweise wird die Vorrichtung bei einer Hausinstallation gemäss Anspruch 8 verwendet.

Im folgenden werden Ausführungsbeispiele der Erfindung anhand der Zeichnungen näher erläutert. Dabei zeigt
Figur 1 eine einphasige Verdrahtungsstruktur der elektrischen Hausinstallation;
Figur 2 die Bildung eines Signals bei einem bevorzugten Beispiel;
Figur 3 eine einfache Signalverdrahtung in einem dreiphasigen Netz mit einer möglichen Anwendung der erfindungsgemässen Vorrichtung;
Figur 4 eine Vorrichtung mit 2 Signaleingängen und 2 Signalausgängen;
Figur 5 die zeitliche Verschiebung eines 3-phasigen Versorgungsnetzes;
Figur 6 den grundsätzlichen Signalverlauf in der Vorrichtung mit Blockbildern; und
Figur 7 eine genauere Blockdarstellung der Vorrichtung.

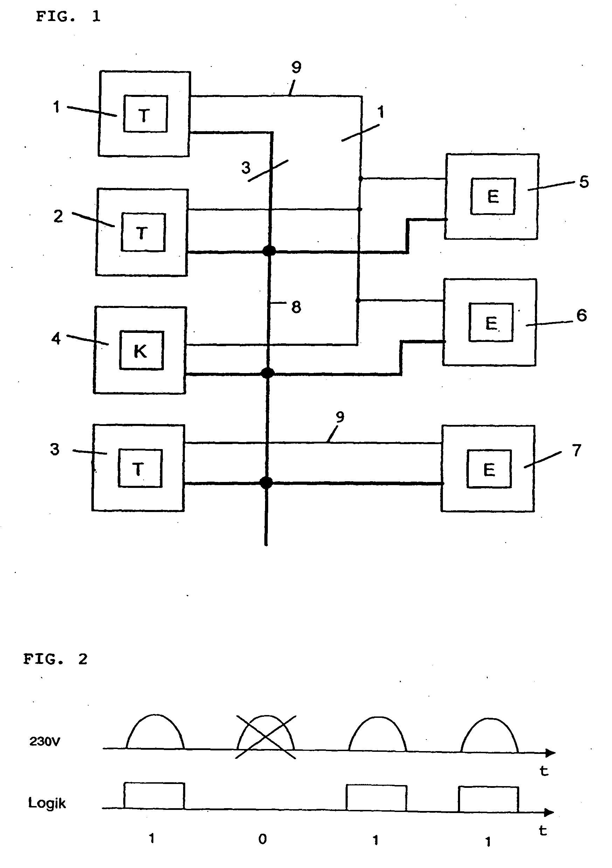

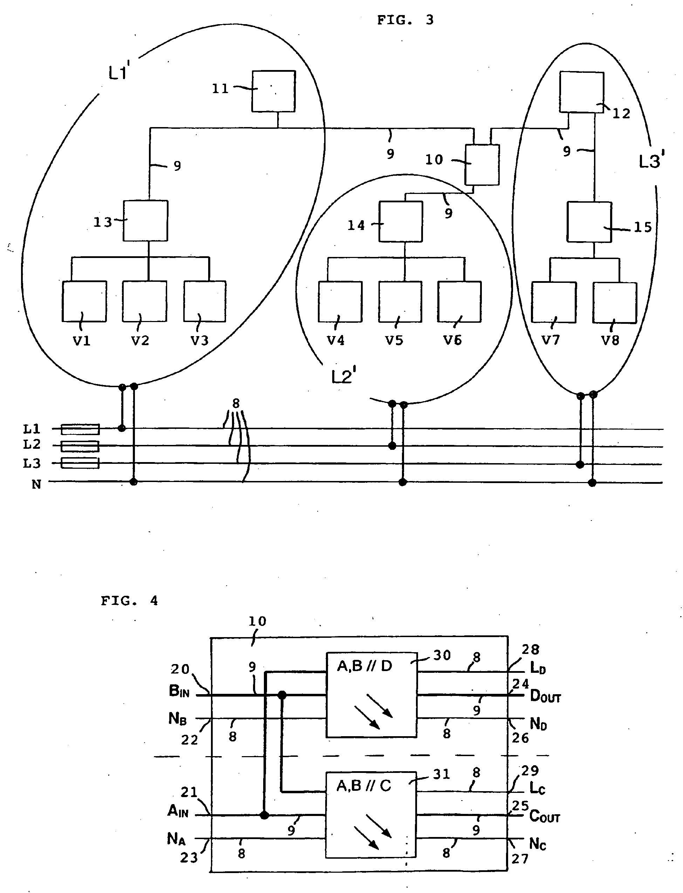

In den Figuren 1 und 2 wird eine bevorzugte Art der Signalübermittlung bei einer Hausinstallation erläutert, bei welcher die Vorrichtung bevorzugterweise verwendet wird. Dabei zeigt Figur 1 zunächst eine Struktur von Bedienungselementen und Empfängern (Nebenstellen), die an der gleichen elektrischen Phase der dreiphasigen Hausinstallation liegen. Später wird dann anhand der Figuren 3 und 4 erläutert, wie mittels der erfindungsgemässen Vorrichtung die Signalübertragung auch auf die anderen Phasen der Hausinstallation möglich ist.

Figur 1 zeigt grob schematisch einen Teil einer Verdrahtungsstruktur einer elektrischen Gebäudeinstallation. Dabei sind mit 1, 2 und 3 Bedienungsgeräte in der Form von Tastern gezeigt, mittels welchen binär codierte Steuersignale abgebbar sind. Mit 4 ist ein konventionelles Bedienungsgerät, ebenfalls als Taster gezeigt, durch welches Steuersignale als uncodierte, längenabhängig auswertbare Signale abgebbar sind. Mit 5, 6 und 7 sind Empfänger dargestellt, welche die Steuerbefehle empfangen und einen Verbraucher schalten, z.B. einen elektrischen Motor für Storen, einen Dimmer für Lampen, einen Motor einer Lüftung usw. Die Verdrahtung der Hausinstallation ist dabei schematisch durch Leitungen 8 und 9 dargestellt, wobei die Leitungen 8 die üblichen dreiadrigen Leitungen für die Netzwechselspannung im Gebäude sind (Neutral-Leiter, Phase und Schutzleiter, wobei der Schutzleiter von den Geräten nicht benötigt wird) und 9 die bevorzugterweise einadrige Leitung zur Übermittlung der Steuersignale zwischen den Geräten darstellt. Die Leitungen 8 übertragen die Netzwechselspannung ohne Signalübertragung, die Leitung 9 dient der Signalübertragung.

Figur 2 zeigt schematisch, wie die binärcodierte Information bzw. die Steuersignale und allfällige Quittierungssignale bei diesem bevorzugten Beispiel verbreitet werden. Es werden zur Darstellung der Informationsbits im gezeigten Beispiel von Figur 2 nur die positiven Halbwellen einer Wechselspannung, bevorzugterweise gerade eben der Installationswechselspannung verwendet. Bevorzugterweise ist dies die 230V/50Hz-Netzwechselspannung. Dabei kann die Zuordnung so erfolgen, dass einer positiven Halbwelle der Binärwert 1 und dem Fehlen einer positiven Halbwelle der Binärwert 0 zugeordnet wird. Die Halbwellen mit umgekehrtem Vorzeichen werden bei diesem Beispiel nicht verwendet. In der Figur ist gezeigt, wie jeweils im Zeitablauf bei den Signalen eine positive Halbwelle auftritt, welche für eine logische 1 steht, oder eine positive Halbwelle ausfällt, was im oberen Teil der Figur durch die durchgestrichene Halbwelle dargestellt ist, die für eine logische 0 steht. Die Übermittlung erfolgt somit dadurch, dass Halbwellen durchgeschaltet werden, wenn eine logische 1 übermittelt werden soll und Halbwellen der gleichen Art gesperrt werden, wenn eine logische 0 übermittelt werden soll. Die Zuordnung der logischen Werte zum Durchschalten bzw. Sperren der Halbwellen könnte natürlich auch umgekehrt sein. In der Figur 2 sind die negativen Halbwellen nicht dargestellt, diese könnten auch auf der Signalleitung vorhanden sein, sofern nur Geräte in der Installation vorhanden sind, die mittels der codierten Binärsignale arbeiten, sie dienen aber nicht zur Informationsübermittlung und müssen daher nicht ausgewertet werden. Anstelle der Übermittlung mittels der positiven Halbwellen, wie in Figur 2 gezeigt könnten natürlich auch ausschliesslich die negativen Halbwellen verwendet werden. Ferner ist es möglich, durch eine Gleichrichtung nur positive Halbwellen zu erzeugen, und diese vollständig zur Signalübermittlung zu verwenden, so dass entgegen Figur 2 keine Lücken bzw. Bitpausen zwischen den einzelnen Halbwellen bzw. Informationsbits entstehen. Für die bevorzugte Anwendung als Kommunikationsverfahren bei Gebäudeinstallationen genügt indes die Übertragungsgeschwindigkeit, wie sie gemäss dem Beispiel von Figur 2 erzielbar ist. Bevorzugterweise wird für die Kommunikation der Geräte nur eine zusätzliche einadrige Leitung 9 verwendet, welche als Signalwechselspannung die 230 Volt der Installationswechselspannung und für die Rückströme den Neutral-Leiter der dreiadrigen Leitung 8 verwendet. Geräte, die zusammen funktionieren sollen, werden somit über eine einzige eindrahtige Leitung, z.B. einen installationsüblichen Kupferdraht von 1,5 mm² Querschnitt, zur Kommunikation miteinander verbunden.

Die sendenden Geräte 1, 2 und 3, welche gemäss der Erfindung binär codierte Informationen bzw. Steuerbefehle senden, können dies grundsätzlich in einem beliebigen von den empfangenden Geräten auswertbaren Format tun. Als Beispiel erfolgt die Informationssendung über die Leitung 9 in der Form von Telegrammen, welche jeweils aus einem Byte bestehen. Zum Beispiel können die beiden anfänglichen Bit 1 und 0 den Start des Telegramms (SOT) darstellen. Jedes Telegramm wird mit einer solchen 1-0-Sequenz eingeleitet und unterscheidet sich dadurch von Signalen von konventionellen Tastern, die ein ununterbrochenes Wechselspannungssignal abgeben. Das dritte Bit des Telegramms ist 0 für Befehlstelegramme bzw. 1 für Szenentelegramme. Unter Szene wird dabei bei der Gebäudeinstallation eine vorgegebene Kombination aus Beleuchtung und Storenstellung bezeichnet. Zum Beispiel kann in einem Vortragssaal die Szene 1 hochgefahrene Storen und eine bestimmte Beleuchtung bedeuten, die dem Vortragenden Erläuterungen an einer Wandtafel oder mittels eines Hellraumprojektors erlaubt. Die Szene 2 hingegen kann z.B. eine stark heruntergedimmte Beleuchtung und geschlossene Storen bedeuten, wie dies für das Zeigen von Dias oder Filmen geeignet ist. Die weiteren Bits eines Befehlstelegramms oder eines Szenentelegramms sind in der Figur dargestellt, wobei die jeweilige Funktion Ein-, Aus- oder Hin- und Herschalten (Toggle), Dimmen oder Fahren (von Storen) angegeben ist. Natürlich ist diese Codierung nur als Beispiel anzusehen und könnte auch in anderer Form erfolgen.

Die Geräte 1, 2 und 3 (Figur 1) können in der Form von Tastern (mit einem Betätigungsteil) zwei verschiedene Telegramme absenden, welche aufgrund der verschieden langen Betätigungszeit des Tasters abgegeben werden. Ein kurzer Tastendruck von kürzer als z.B. 500 Millisekunden erzeugt eines der Telegramme nach Loslassen der Taste. Wird die Taste länger gedrückt, also länger als 500 Millisekunden, so wird das entsprechende andere Telegramm nach Verstreichen der 500 Millisekunden ausgelöst. Nach dem Loslassen der Taste nach einem langen Tastendruck wird zusätzlich der Stop-Befehl gesendet. Die gezeigten Taster 1, 2 und 3 können also jeweils drei Telegramme abgeben, das dem kurzen Tastendruck entsprechende Telegramm, z.B. ein Befehlstelegramm für "Ein", ein dem langen Tastendruck entsprechendes Befehlstelegramm, also z.B. das Befehlstelegramm für "Aus", sowie das "Stop"-Befehlstelegramm nach langem Tastendruck. Beim jeweiligen empfangenden Gerät 5, 6 und 7 wird das entsprechende Befehlstelegramm ausgewertet und der am empfangenden Gerät angeschlossene Verbraucher, also z.B. ein Motor, eine Lampe oder ein anderer Verbraucher entsprechend betätigt.

Bei den Geräten, die Telegramme für Szenen abgeben, sind vorzugsweise Tastaturfelder angeordnet, so dass aus der Mehrzahl von Szenen durch entsprechende Tastaturbetätigung die gewünschte Szene ausgewählt werden kann und das entsprechende Szenentelegramm abgegeben wird.

Die jeweiligen sendenden Geräte 1, 2 und 3 können ihnen zugeordnete fest einprogrammierte Befehlstelegramme, also z.B. die Telegramme für "Ein" bzw. "Aus" und "Stop" enthalten, so dass für die Befehlsabgabe der entsprechenden Funktion in der Hausinstallation der entsprechende Taster installiert werden muss. Die Taster können aber natürlich auch so programmierbar sein, z.B. durch einstellbare Schalter, dass bei einem universell ausgestalteten Taster die entsprechenden gewünschten Telegramme gewählt werden können. Vorzugsweise wird das Verfahren und die Hausinstallation so ausgeführt, dass zusätzlich konventionelle Befehlsgeräte bzw. Taster 4 verwendet werden können, welche bei Tastenbetätigung ein normales, nicht codiertes Wechselspannungssignal (also mit positiven und negativen Halbwellen) auf die Leitung 9 abgeben. Dieses Signal kann von den empfangenden Geräten 5 und 6 auf herkömmliche Weise nach seiner Betätigungslänge interpretiert werden. Das Tastatursignal wird dabei auf bekannte Art und Weise entprellt und wird vorzugsweise ebenfalls als 230V-Wechselspannungssignal, allerdings mit sich abfolgenden positiven und negativen Halbwellen auf die Leitung 9 gegeben. Die empfangenden Geräte erkennen dabei durch das Fehlen der 1-0-Sequenz (SOT) dass es sich nicht um ein Telegramm, sondern um eine konventionelle Befehlsübermittlung durch ein Wechselspannungssignal handelt.

Wie beschrieben, wird bei diesem bevorzugten Beispiel keine Adressierung der empfangenden Geräte durchgeführt, sondern die Adressierung ergibt sich durch die Verdrahtung der Hausinstallation. So empfangen im Beispiel von Figur 1 die Geräte 5 und 6 die Befehle der Taster 1 und 2 und des konventionellen Tasters 4. Das Gerät 7 empfängt nur die Befehle des Tasters 3. Durch diese bevorzugte einfache adressierungslose Befehlsstruktur, die sich durch die Verkabelung ergibt, wird die Installation besonders einfach. Durch die definierte Länge der Telegramme kann auf ein spezielles Telegramm zur Beendigung der Telegrammübermittlung (End of Telegram; EOT) verzichtet werden. Die langsame Datenübertragung mit den Halbwellen hoher Spannung ergibt eine hohe Zuverlässigkeit der Übertragung. Eine Halbwelle eines 230V-Netzspannungssignals kann dabei als logisch 1 interpretiert werden, wenn das Signal mindestens während 6 Millisekunden anliegt. Die elektronische Schaltung des empfangenden Gerätes frägt die Spannung mehrmals ab, z.B. fünf Mal, und interpretiert das Signal als Halbwelle, wenn während 4 der 5 Abfragezeiten der Elektronik das Signal z.B. den Wert von 100Volt überschreitet. Dadurch wird sichergestellt, dass eingekoppelte Störungen nicht als Betätigung interpretiert werden. Für die Signale der konventionellen Taster kann das 230V-Signal als solches erkannt werden, wenn es während mindestens 60 Millisekunden anliegt, was drei Halbwellen entspricht. Ein langes bzw. kurzes konventionelles Signal wird durch die Länge der Tastenbetätigung (z.B. länger als 500 ms und kürzer als 500 ms) unterschieden.

Die empfangenden Geräte 5, 6 und 7 können ebenfalls sendende Geräte sein, indem sie ihren Zustand an die anderen Geräte abgeben. Dies ist insbesondere dann sinnvoll, wenn sich konventionelle Befehlsgeräte, z.B. der Taster 4, in der Installation befinden. Mit einem über das Telegramm übermittelten Ein- bzw. Aus-Befehl wird ohnehin gleichzeitig der Zustand mitgeliefert, welchen das empfangende Gerät nach der Auswertung annehmen wird. In diesem Fall ist eine Rückmeldung nicht notwendig. Bei einem normalen, uncodierten 230V-Signal fehlt indes diese Information. Aus diesem Grunde ist es bevorzugt, wenn die Geräte so realisiert sind, dass nach dem Empfang eines 230V-Signals der anzunehmende oder angenommene Zustand des Empfangsgerätes auf die Leitung 9 übertragen wird. Dadurch kann sichergestellt werden, dass die beteiligten sendenden Geräte den richtigen Zustand des empfangenden Gerätes erhalten und allenfalls anzeigen und/oder weiterverarbeiten können.

Die bisher beschriebene Kommunikation zwischen den Geräten arbeitet sehr zuverlässig zwischen den an der selben Phasenleitung der Leitungen 8 liegenden Geräte. Es kann jedoch auch wünschenswert sein, dass Signale an Geräte übermittelt werden, die an einer anderen Phase der Hausinstallation angeschlossen sind. Ferner kann eine sichere Signalübertragung auch innerhalb des selben Phasenkreises durch das Vorsehen verschiedener Sicherungskreise oder Fehlerstromkreise der Hausinstallation verhindert werden oder durch Installationsvorschriften verdrahtungsmässig unzulässig sein, da die Signalleitung 9 ja an sich auch die Netzwechselspannung führt, wenn auch nicht zur Übertragung von Nutzenergie, sondern nur zur Signalübertragung.

Figur 3 zeigt nun die Situation, bei welcher Apparate und Nebenstellen an verschiedene Phasen der Hausinstallation angeschlossen sind. In der Figur sind die jeweils einer Phase zugehörigen Taster und Empfänger mit einer Umrandung L1', L2' und L3' gekennzeichnet und es ist symbolisch angegeben, dass die jeweilige Phasenleitung und der Neutralleiter der Hausinstallation zu diesen Apparaten und Nebenstellen geführt ist, indem die Phasenleitung L1, L2, L3 bis an die Umrandung L1', L2', L3' herangeführt ist. Die weitere Verdrahtung innerhalb des jeweiligen Phasenkreises ist in Figur 3 nicht dargestellt, da dies dem Fachmann, allenfalls abweichend nach den nationalen Installationsvorschriften, bekannt ist. Innerhalb der Umrandungen L1', L2', L3' sind nur die Signalleitungen 9 gezeigt. Für diese trifft bevorzugterweise das zu Figur 1 und Figur 2 Gesagte betreffend die Signale zu. Die Signalleitungen verbinden die Bedienungsapparate 11, 12 und die Empfänger 13, 14, 15 mit den daran angeschlossenen Verbrauchern V1-V8. In Figur 3 ist nun mit 10 eine erfindungsgemässe Vorrichtung gezeigt. Diese ermöglicht auf noch zu erläuternde Weise die Signalverbindung des Bedienungsapparates 11 (z.B. ein Taster, der Telegramme abgibt) und des Bedienungsapparates 12 (z.B. ein konventioneller Apparat, der zeitabhängig auswertbare Wechselspannungssignale abgibt) mit dem Empfänger 14, so dass auch die Verbraucher V4, V5, V6 von den Apparaten 11 und 12 aus anderen Phasen als der Empfängerphase L2 bedienbar sind. Natürlich ist dies nur ein einfaches Beispiel; es können mehrere Vorrichtungen 10 einsetzbar sein, damit von jedem Apparat jeder Phase jeder Empfänger jeder anderen Phase bedienbar ist. Die Anzahl der Vorrichtungen 10 richtet sich dabei nach den gewünschten phasenübergreifenden Verbindungen. Ferner können Vorrichtungen 10 innerhalb der selben Phase bei darin gebildeten unterschiedlichen Sicherungskreisen oder Fehlerstromschutzkreisen angeordnet werden, um die Signale von einem Kreis auf den anderen zu übertragen. Auch für die erwähnten Rückmeldungen eines Gerätes können die Vorrichtungen 10 eingesetzt werden.

Figur 4 zeigt in stark vereinfachter schematischer Darstellung eine Vorrichtung 10 gemäss der Erfindung. Bei dieser sind als Beispiel zwei Eingangsanschlüsse 20 und 21 für Signalleitungen vorgesehen und zwei Ausgänge 24 und 25 für die entsprechenden abgehenden Signale. Die Vorrichtung könnte aber auch nur einen Eingang und einen Ausgang aufweisen und würde dann nur aus den oberhalb der unterbrochenen Linie dargestellten Elementen oder aus den unterhalb dieser Linie dargestellten Elementen bestehen. Am Eingang 20 kann das Datensignal angelegt werden, welches in der Figur mit B_{IN} bezeichnet ist. Bei der bevorzugten Verwendung, bei welcher das Datensignal als Netzspannung auf einer separaten Leitung 9 geführt wird, wird diese am Eingangsanschluss 20 angeschlossen, weshalb deren Fortführung in der Vorrichtung 10 ebenfalls mit 9 bezeichnet ist. Bei diesem Beispiel der Datenübertragung erfolgt der Rückstrom auf dem Neutralleiter der Hausinstallation, am Eingang 22 ist daher beim bevorzugten Beispiel der Neutralleiter angeschlossen, was in Figur 4 mit N_{B} bezeichnet ist und die entsprechende Leitung in der Vorrichtung 10 ist mit 8 bezeichnet, um darzustellen dass sie in diesem Fall der Fortführung des Neutralleiters der Hausinstallationsleitungen 8 entspricht. Dasselbe gilt für die Eingänge 21 und 23, an welchen die Signale A_{IN} und N_{A} angeschlossen werden. Am Ausgang der Vorrichtung 10 werden die Signale wieder für einen anderen Phasen- oder Sicherungs- oder Fehlerstromschutzkreis bereitgestellt, wobei am Ausgang 24 wiederum die Signalleitung 9 dieses Kreises angeschlossen werden kann und der Neutralleiter der Hausinstallationsleitungen 8, was am Ausgang 24 und am Ausgang 26 mit den Bezeichnungen D_{OUT} und N_{D} dargestellt ist. Bei dem dargestellten bevorzugten Ausführungsbeispiel ist weiter an der Signalausgangsseite ein Anschluss 28 vorgesehen, an welchem eine der Phasenleitungen 8 der Hausinstallation anschliessbar ist, was signalmässig in der Figur mit L_{D} für ein Phasensignal dargestellt wird. Dieselben Verhältnisse liegen an den zweiten Ausgängen unterhalb der unterbrochenen Linie vor, wobei dort ebenfalls die Ausgänge 25 und 27 für die Signale C_{OUT} und N_{C} sowie ein Eingang 29 für eine Wechselstromphase vorgesehen ist, welche hier mit L_{C} bezeichnet ist. In den Blöcken 30 und 31 werden die Eingangssignale empfangen und es werden Ausgangssignale erzeugt, welche inhaltsmässig identisch zu den Eingangssignalen sind und an den Ausgängen wieder abgegeben werden. Es ist ferner gezeigt, dass die Signale von den Eingängen 20 und 21 wahlweise an den Ausgängen 24 und 25 wieder abgegeben werden können. Es kann also gewählt werden, ob ein Signal am Eingang 20 am Ausgang 24 und/oder am Ausgang 25 erscheinen soll und ob ein Eingangssignal am Eingang 21 ebenfalls am Ausgang 24 und/oder 25 erscheinen soll. Dies erlaubt z.B. den Einsatz der Vorrichtung 10, wie er in Figur 3 dargestellt ist, wo Signale auf zwei Eingängen von den Phasenkreisen L1' und L3' an die Vorrichtung abgegeben werden, welche beide als Signale an den Phasenkreis L2' abgegeben werden. Entsprechend wäre in Figur 3 die Signalleitung 9 und der Nulleiter 8 vom Phasenkreis L1' her an den Eingängen 21 und 23 angeschlossen, die Signalleitung 9 und der Nulleiter 8 vom Phasenkreis L3' her an den Eingängen 20 und 22 und die Signalleitung 9 und der Neutralleiter vom Phasenkreis L2' z.B. an den Ausgängen 25 und 27. Ebenso wäre, wie noch erläutert wird, die Phasenleitung L2 des Phasenkreises L2' am Anschluss 29 angeschlossen. Die Ausgänge 24 und 26 sowie der Anschluss 28 wären in diesem Fall nicht an weiterführende Leitungen angeschlossen.

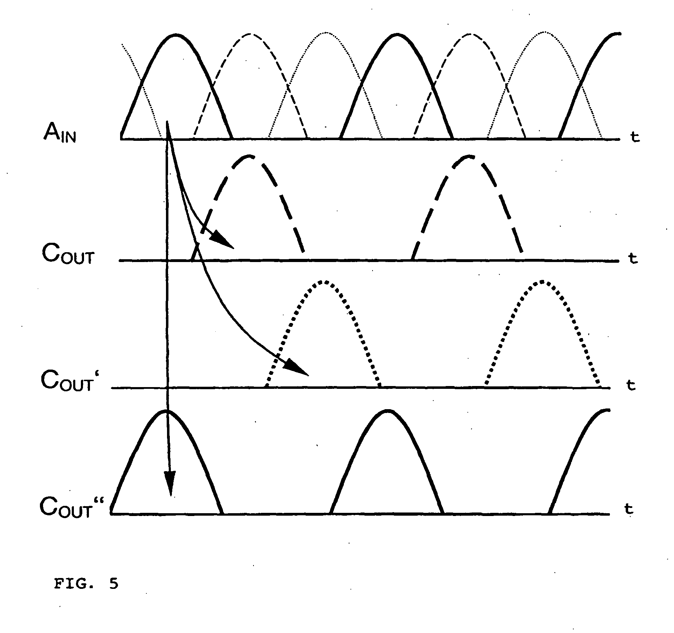

Figur 5 zeigt Beispiele für die Signale A_{IN} am Eingang 21 sowie Signale C_{OUT} am Ausgang 25. Es wird dabei wiederum von dem vorstehend erläuterten Beispiel ausgegangen, bei welchem die Signale als positive Halbwellen einer Wechselspannung, vorzugsweise der Netzwechselspannung vorliegen. Das Signal A_{IN} ist dabei als ausgezogene Linie als aus positiven Netzspannungshalbwellen bestehend dargestellt. Mit den verschieden unterbrochenen Linien ist gezeigt, dass ein solches Signal auf anderen Phasen durch entsprechend der Phasenverschiebung im Drehstromnetz verschobene Halbwellen dargestellt sein könnte. Entsprechend wird nun das am Ausgang 25 der Vorrichtung bereitgestellte Signal, welches signalmässig dem Eingangssignal AIN entsprechen muss, um die Information desselben weiterzugeben, phasenverschoben erzeugt, um dieses Signal in einem anderen Phasenkreis entsprechend der dort vorliegenden Phasenlage weitergeben zu können. Mit dem Signal C_{OUT} ist dabei in Figur 5 dargestellt, dass das Ausgangssignal um eine Phasenlage verschoben wiedergegeben wird. Dies könnte z.B. der Fall sein, wenn das Eingangssignal gemäss Figur 3 aus dem Phasenkreis L1' stammt und das Ausgangssignal an den Phasenkreis L2' abgegeben wird, in welchen die Phase um eine Phasenlage verschoben ist. Soll das Eingangssignal A_{IN} an einen Phasenkreis übertragen werden, dessen Phase um zwei Phasenlagen gegenüber dem Phasenkreis verschoben ist, in welchem die Signale A_{IN} vorliegen, so gibt sich die Signallage, wie sie in Figur 5 mit dem Signal C_{OUT}, dargestellt ist. Weiter ist es möglich, dass das Signal nicht phasenverschoben abgegeben wird, bzw. derart phasenverschoben, dass das Signal jeweils um eine Signalhalbwelle nachhinkt, was in Figur 5 mit dem Signal C_{OUT"} dargestellt ist. Die Vorrichtung ermöglicht den Signalempfang in einer Phasenlage und gibt ein signalmässig identisches, neu erzeugtes Signal in entweder der selben Phasenlage oder in der um eine oder mehrere Phasenlagen verschobenen Phasenlage wieder ab.

Die Vorrichtung ist vorstehend für die Verwendung anhand des bevorzugten Beispiels erläutert worden, bei welchem die Signale auf separaten Installationsleitungen 9 laufen, welche zu den üblichen Hausinstallationsleitungen 8 zusätzlich verlegt werden. Die Vorrichtung ist aber grundsätzlich auch anwendbar, wenn Signale, wie im Stand der Technik an sich bekannt, als Netzspannungssignale auf den Phasenleitungen selber laufen. Entsprechend würden an den Eingängen der Vorrichtung nicht die Leitungen 9 angeschlossen, die dann nicht vorhanden sind, sondern es würden direkt die jeweiligen Phasenleitungen angeschlossen, auf denen die Signale vorliegen. Diese werden dann am Ausgang wiederum auf anderen Phasenleitungen abgegeben.

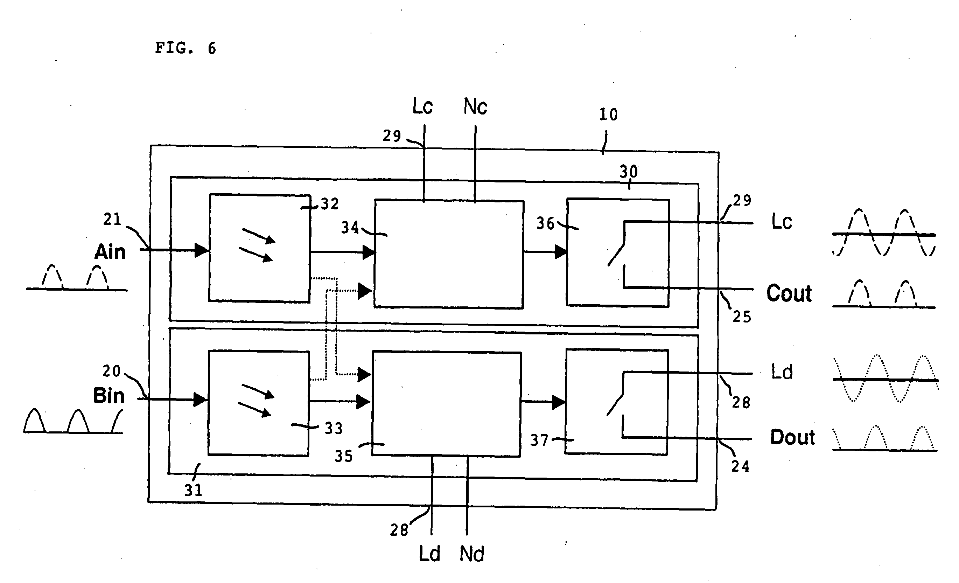

Figur 6 zeigt eine etwas detailliertere Darstellung der Vorrichtung 10 entsprechend derjenigen von Figur 4, wobei gleiche Bezugsziffern wie bis anhin verwendet, gleiche Elemente bezeichnen. Die Vorrichtung 10 weist dabei bevorzugterweise eine galvanische Trennung zwischen den Eingängen und den jeweiligen Ausgängen auf, was im gezeigten Beispiel derart ausgeführt ist, dass eingangsseitig die galvanische Trennung durch eine Optokopplerstufe 32 bzw. 33 gewährleistet wird. Das Signal am Ausgang des Optokopplers gelangt dann auf eine Logikschaltung 34 bzw. 35, deren Speisung vorzugsweise aus derjenigen Phasenleitung abgeleitet wird, welche am Ausgang bzw. Anschluss 28 bzw. 29 angeschlossen ist. In der Figur ist dies durch entsprechende Eingänge für die Phasenleitung und den Neutralleiter am Logikschaltkreis 34 schematisch dargestellt. Natürlich wird im Falle von Netzspannung die Speisespannung für den Logikschaltkreis entsprechend aufbereitet, z.B. durch eine kapazitive Spannungsteilung und Gleichrichtung. Die Spannung im Logikschaltkreis 34, 35 kann z.B. 5 Volt betragen. Der Logikschaltkreis 34 bzw. 35 steuert seinerseits einen Schalter 36 bzw. 37, vorzugsweise einen Halbleiterschalter, der am Ausgang das Signal entsprechend dem Eingangssignal wieder erzeugt. Dies erfolgt automatisch in der richtigen Phasenlage, wenn als zu schaltendes Eingangssignal für den Schalter diejenige Phase verwendet wird, für deren Phasenkreis das Ausgangssignal wiederum bestimmt ist. In Figur 6 ist dies so dargestellt, dass am Eingang 29 entsprechend die Phasenleitung 8 mit ihrem normalen Phasensignal angeschlossen ist. Der Schalter 36 bildet dann, gesteuert von der Logik 34, aus diesem Vollwellenphasensignal dasjenige Halbwellen- oder auch Vollwellensignal nach, welches am Eingang 21 anliegt und von der Logikschaltung 34 empfangen worden ist. Entsprechendes kann im zweiten Block 31 der Vorrichtung 10 erfolgen, in diesem Fall für einen weiteren Phasenkreis mit einer verschobenen Phase, wie das anhand der Signale in der Figur dargestellt ist. Die Eingangssignale können wiederum wahlweise die Ausgangssignale beider Blöcke steuern, wie dies durch die sich kreuzenden Signalpfade nach der jeweiligen galvanischen Trennung 32 bzw. 33 gezeigt ist. Die Logikschaltung 35 wird dabei wiederum aus der Zielphase, in diesem Fall der Phase L_{D} gespiesen. Eingangs- und ausgangsseitig sind die Neutralleiter zur Vereinfachung der Zeichnung nicht dargestellt, diese werden aber grundsätzlich wie in Figur 4 dargestellt in die Vorrichtung hineingeführt.

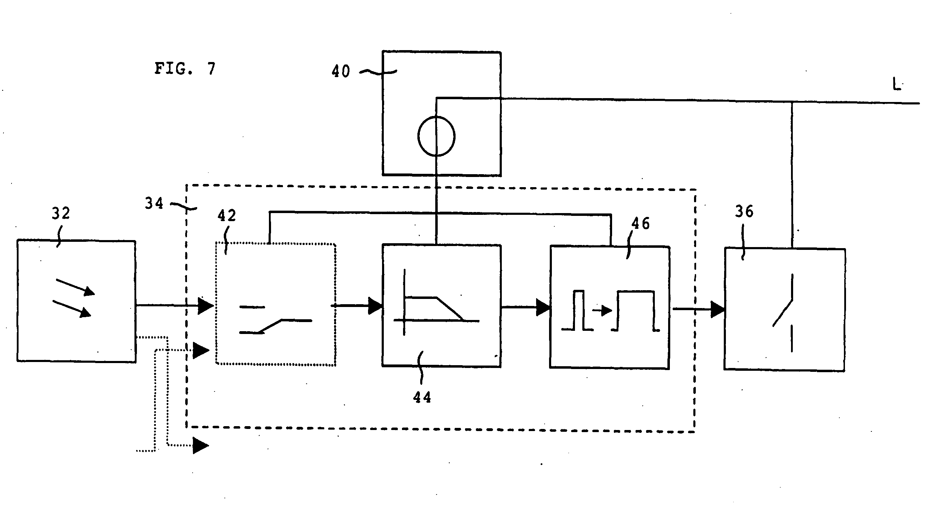

Figur 7 zeigt nun eine Darstellung nur des einen Kanals der zweikanaligen Vorrichtung 10 von Figur 6, wobei wiederum gleiche Bezugszeichen gleiche Elemente darstellen. In Figur 7 ist dabei der Logikschaltkreis 34 noch genauer dargestellt. Dabei ist dessen bereits erwähnt Speisung 40 ersichtlich, sowie eingangsseitig eine Verriegelungsschaltung 42, auf welche die Signale nach der Optokopplerstufe 32 gelangen. Die Verriegelungsschaltung 42 ermöglicht die wahlweise Verbindung der beiden Eingangssignale an den Ausgang bzw. zum Schalter 36. Die Umschaltung kann dabei durch entsprechend bedienbare Schalter an der Vorrichtung 10 ausgeführt sein, welche bei der Installation entsprechend dem gewünschten Signalfluss eingestellt werden. Danach gelangt das Signal auf ein Tiefpassfilter 44, welches eventuelle hochfrequente Störungen herausfiltert, welche die Signalaufbereitung im entsprechenden Block 46 stören könnten, in welchem die Steuersignale für den Schalter 36 erzeugt werden. Wird also durch die Logik eine Halbwelle am Eingang detektiert, so erzeugt die Vorrichtung für den Schalter 36 ein Durchlasssignal, welches die entsprechende Phasenleitung am Anschluss 28 auf entsprechende Weise auf die Ausgangsklemme 24 durchschaltet. Wie gesagt, kann es sich dabei um Telegramme bevorzugterweise aus einzelnen Halbwellen nur einer Polarität handeln, oder es könnten fortlaufende Vollwellen- oder Halbwellensignale sein, welche eine Information aufgrund ihrer Länge enthalten. Beide Arten von Signalen sind auf die gezeigte Weise ohne weiteres am Eingang empfangbar, von der Logik auswertbar und durch den Schalter wiederum am Ausgang erzeugbar.

Bei der bevorzugten zweikanaligen Ausführungsform, wie sie in den Figuren 4, 6 und 7 dargestellt ist, kann sich der Zustand ergeben, bei welchem gleichzeitig zwei Signale eintreffen. Wird die Vorrichtung so betrieben, dass jeder Block 30, 31 nur für ein Eingangssignal zuständig ist, was dem Fall entsprechen würde, wenn in Figur 6 die Signalpfade gemäss den unterbrochenen Pfeilen nach den Optokopplern 32, 33 nicht vorgesehen wären, so ergibt dies kein Problem. Wird aber eine Übertragung von beiden Eingängen auf dieselbe Logikschaltung gewünscht, so muss der Fall des gleichzeitigen Eintreffens von verschiedenen Signalen, welche jeweils Telegramme oder fortlaufende Signale sein können, geregelt werden. Dies erfolgt z.B. derart, dass jeweils das zuerst ankommende Signal Priorität erhält und die Vorrichtung demgemäss so ausgeführt ist, dass sie nach Erhalt eines Signales für eine vorbestimmte Zeit den Empfang eines weiteren Signales ignoriert. Dies ergibt eine einfache Lösung eines allfälligen Konfliktes. Es besteht natürlich auch die Möglichkeit, dass die Vorrichtung 10 das zweite Signal speichert und dies nach der Weiterleitung des ersten Signales zeitlich entsprechend versetzt an ihren Ausgängen abgibt. Ferner ist es auch möglich, dass die Vorrichtung jeweils ein Quittierungssignal erzeugt, wenn sie ein Signal weitergeleitet hat. In diesem Fall kann die Nichtweiterleitung durch Sperren durch den Befehlsgeber erkannt werden und er kann das entsprechende Befehlssignal erneut an die Vorrichtung 10 abgeben.

Die Vorrichtung 10 ist vorzugsweise in einem für den Schalttafeleinbau bei einer Hausinstallation geeigneten Gehäuse untergebracht. Die Eingangsanschlüsse können doppelklemmig sein, um das Schlaufen der Leitungen zu vereinfachen.

Zur Signalübertragung zwischen verschiedenen Phasenkreisen L1', L2', L3' einer Hausinstallation wird also eine Vorrichtung 10 verwendet, die ein Signal an ihren Eingängen empfängt und dies entsprechend der Zielphase gleich oder verschoben an ihrem Ausgang abgibt. Dies erlaubt die sichere Datenübertragung zwischen mehreren Phasenkreisen der Hausinstallation.

## Patentansprüche

1. Vorrichtung zur Signalübertragung zwischen phasenkreisgetrennten und/oder sicherungskreisgetrennten und/oder schutzkreisgetrennten Apparaten (11-15) einer elektrischen Hausinstallation, wobei die Vorrichtung (10) mindestens einen Signaleingang (20, 21) und Signalempfangsmittel, die zum Empfang von Signalen in der Form von Netzspannungswellen, insbesondere Netzspannungshalbwellen, ausgestaltet sind, und mindestens einen Signalausgang (24, 25) und Signalerzeugungsmittel aufweist, die zur Abgabe von Signalen in der Form von Netzspannunghalbwellen ausgestaltet sind, wobei die Signalerzeugungsmittel zur Reproduktion der von den Signalempfangsmitteln empfangenen Signale ausgestaltet sind, **dadurch gekennzeichnet, dass** die Vorrichtung (10) an deren Ausgangsseite einen Anschluss (28, 29) zum Anlegen einer Netzspannungsphase (L1, L2, L3) aufweist, und dass das Signalerzeugungsmittel zur Bereitstellung der signalmässig gesteuerten Netzspannungshalbwellen dieser Phase (L1, L2, L3) am Signalausgang (24, 25) ausgestaltet ist.

2. Vorrichtung nach Anspruch 1, **dadurch gekennzeichnet, dass** die Signalerzeugungsmittel zur phasengleichen Reproduktion und/oder zur phasenverschobenen Reproduktion der empfangenen Signale entsprechend eines Phasenverschubs der Hausinstallation ausgestaltet ist.

3. Vorrichtung nach Anspruch 1 oder 2, **dadurch gekennzeichnet, dass** die Signaleingänge und Signalempfangsmittel einerseits und die Signalausgänge und Signalerzeugungsmittel andererseits voneinander galvanisch getrennt sind.

4. Vorrichtung nach einem der Ansprüche 1 bis 3, **dadurch gekennzeichnet, dass** jeweils ein Signaleingang signalmässig jeweils einem wählbaren Signalausgang von mehreren Signalausgängen der Vorrichtung zugeordnet ist oder dass ein Signaleingang signalmässig mehreren Signalausgängen zugeordnet ist, oder dass mehrere Signaleingänge signalmässig einem Signalausgang zugeordnet sind.

5. Vorrichtung nach einem der Ansprüche 1 bis 4, **dadurch gekennzeichnet, dass** zwei oder mehrere Eingänge und/oder zwei oder mehrere Ausgänge vorgesehen sind, wobei jeder Eingang signalmässig jedem Ausgang zugeordnet ist.

6. Vorrichtung nach einem der Ansprüche 1 bis 5, **dadurch gekennzeichnet, dass** diese derart ausgestaltet ist, dass beim Empfang eines ersten Signals für eine vorbestimmte Zeit weitere empfangene Signale weiterer Eingänge nicht übertragen werden.

7. Vorrichtung nach einem der Ansprüche 1 bis 6; **dadurch gekennzeichnet, dass** diese zum Empfang und zur Erzeugung von Signalen ausgestaltet ist, die entweder nur als positive oder negative Halbwellen vorliegen und allenfalls gelückt sind.

8. Verwendung einer Vorrichtung nach einem der Ansprüche 1 bis 7 zur Übertragung von Signalen bei einer Hausinstallation, bei welcher die Signale als Netzspannungshalbwellen auf einer von den Phasenleitungen (Ph, N, PE) getrennten Installationsleitung (9) übertragen werden.

9. Verwendung nach Anspruch 8, **dadurch gekennzeichnet, dass** Signale sowohl als eine einen Binärcode darstellende Abfolge von Halbwellen als auch als eine über deren Länge auszuwertende Folge von Halbwellen übertragen werden, wobei die Vorrichtung beide Signalübertragungsarten weiterleitet.

10. Verwendung nach Anspruch 8 oder 9, **dadurch gekennzeichnet, dass** die Vorrichtung (10) zur Übertragung von Signalen zwischen Apparaten (11 bis 15) verschiedener Phasenkreise (L1', L2', L3') verwendet wird, und/oder dass die Vorrichtung zur Übertragung von Signalen innerhalb des selben Phasenkreises zwischen verschiedenen Sicherungskreisen oder Fehlerstromkreisen eingesetzt wird.

## Claims

1. A device for transmitting signals between apparatus (11-15) of a domestic electrical installation which are separated by phase circuits and/or fuse circuits and/or protective circuits, the device (10) having at least one signal input (20, 21) and signal reception means which are configured to receive signals in the form of mains voltage waves, in particular mains voltage half-waves, and at least one signal output (24, 25) and signal generation means which are configured to emit signals in the form of mains voltage half-waves, the signal generation means being configured to reproduce the signals received by the signal reception means, **characterised in that** on the output side of the device (10) has a connection (28, 29) for applying a mains voltage phase (L1, L2, L3) [sic], and **in that** the signal generation means is configured for providing the signal-wise controlled mains voltage half-waves of this phase (L1, L2, L3) at the signal output (24, 25).

2. A device according to Claim 1, **characterised in that** the signal generation means is configured for the in-phase reproduction and/or for the out-of-phase reproduction of the received signals corresponding to a phase shift of the domestic installation.

3. A device according to Claim 1 or 2, **characterised in that** the signal inputs and signal reception means on one hand and the signal outputs and signal generation means on the other hand are galvanically separated from one another.

4. A device according to one of Claims 1 to 3, **characterised in that** in each case a signal input is associated signal-wise in each case with one selectable signal output of several signal outputs of the device or that a signal input is associated signal-wise with a plurality of signal outputs, or that a plurality of signal inputs are associated signal-wise with a signal output.

5. A device according to one of Claims 1 to 4, **characterised in that** two or more inputs and/or two or more outputs are provided, each input being associated signal-wise with each output.

6. A device according to one of Claims 1 to 5, **characterised in that** it is configured such that upon receiving a first signal for a predetermined time further received signals of further inputs are not transmitted.

7. A device according to one of Claims 1 to 6, **characterised in that** it is configured to receive and to generate signals which exist either only as positive or negative half-waves and are if necessary gapped.

8. The use of a device according to one of Claims 1 to 7 for transmitting signals in a domestic installation, in which the signals are transmitted as mains voltage half-waves on an installation line (9) separated from the phase lines (Ph, N, PE).

9. The use according to Claim 8, **characterised in that** signals are transmitted both as a sequence of half-waves representing a binary code and as a sequence of half-waves which is to be evaluated over the length thereof, the device relaying both types of signal transmission.

10. The use according to Claim 8 or 9, **characterised in that** the device (10) is used for transmitting signals between apparatus (11 to 15) of different phase circuits (L1', L2', L3'), and/or that the device is used for transmitting signals within the same phase circuit between different fuse circuits or leakage current circuits.

## Revendications

1. Dispositif de transmission de signaux entre des appareils ( 11 à 15 ), séparés du circuit de phase et/ou séparés du circuit de sécurité et/ou séparés du circuit de protection, d'une installation électrique domestique, le dispositif ( 10 ) comportant au moins une entrée de signal ( 20, 21 ) et des moyens de réception de signaux qui sont conçus pour la réception de signaux sous la forme d'ondes de tension de réseau, notamment de demi-ondes de tension de réseau, et au moins une sortie de signal ( 24, 25 ) et des moyens de production de signaux qui sont conçus pour la fourniture de signaux sous la forme de demi-ondes de tension de réseau, les moyens de production de signaux étant conçus pour la reproduction des signaux reçus par les moyens de réception de signaux, **caractérisé par le fait que** le côté sortie du dispositif ( 10 ) comporte une borne ( 28, 29 ) pour l'application d'une phase de tension de réseau ( L1, L2, L3 ) et que les moyens de production de signaux sont conçus pour mettre à disposition à la sortie de signal ( 24, 25 ) les demi-ondes de tension de réseau de cette phase ( L1, L2, L3 ) qui sont commandées conformément au signal.

2. Dispositif selon la revendication 1, **caractérisé par le fait que** les moyens de production de signaux sont conçus pour la reproduction avec concordance de phase et/ou pour la reproduction avec décalage de phase des signaux reçus en fonction d'un déphasage de l'installation domestique.

3. Dispositif selon la revendication 1 ou 2, **caractérisé par le fait que** les entrées de signal et les moyens de réception de signaux d'une part et les sorties de signal et les moyens de production de signaux d'autre part sont isolés électriquement les uns des autres.

4. Dispositif selon l'une des revendications 1 à 3, **caractérisé par le fait que**, à chaque fois, une entrée de signal est associée conformément au signal à une sortie de signal sélectionnable parmi plusieurs sorties de signal du dispositif ou qu'une entrée de signal est associée conformément au signal à plusieurs sorties de signal ou que plusieurs entrées de signal sont associées conformément au signal à une sortie de signal.

5. Dispositif selon l'une des revendications 1 à 4, **caractérisé par le fait que** deux ou plusieurs entrées et/ou deux ou plusieurs sorties sont prévues, chaque entrée étant associée conformément au signal à chaque sortie.

6. Dispositif selon l'une des revendications 1 à 5, **caractérisé par le fait qu'**il est conçu de telle sorte que, lors de la réception d'un premier signal, d'autres signaux reçus d'autres entrées ne sont pas transmis pendant un temps prédéterminé.

7. Dispositif selon l'une des revendications 1 à 6, **caractérisé par le fait qu'**il est conçu pour la réception et pour la production de signaux qui sont présents soit seulement comme demi-ondes positives soit seulement comme demi-ondes négatives et qui ont éventuellement des trous.

8. Utilisation d'un dispositif selon l'une des revendications 1 à 7 pour la transmission de signaux dans une installation domestique, les signaux étant transmis comme demi-ondes de tension de réseau sur une ligne d'installation ( 9 ) séparée des lignes de phase ( Ph, N, PE ).

9. Utilisation selon la revendication 8, **caractérisée par le fait que** des signaux sont transmis aussi bien comme une succession de demi-ondes représentant un code binaire que comme une succession de demi-ondes à évaluer par le biais de leur longueur, le dispositif retransmettant les deux types de transmission de signaux.

10. Utilisation selon la revendication 8 ou 9, **caractérisée par le fait que** le dispositif ( 10 ) est utilisé pour la transmission de signaux entre des appareils ( 11 à 15 ) de différents circuits de phase ( L1', L2', L3' ) et/ou que le dispositif est utilisé pour la transmission de signaux à l'intérieur du même circuit de phase entre différents circuits de sécurité ou circuits à courant de défaut.
